# EUROPEAN PATENT SPECIFICATION

(11) **EP 2 851 708 B1**
(45) Date of publication and mention of the grant of the patent: **08.01.2020**
(21) Application number: 12876785.2
(22) Date of filing: 16.05.2012
(51) Int. Cl.: G01T 1/20, G21K 4/00

(54) **PIXELIZED SCINTILLATION CRYSTAL FILM, AND PREPARATION METHOD AND APPLICATION THEREOF**
GEPIXELTE SZINTILLATIONSKRISTALLFOLIE UND HERSTELLUNGSVERFAHREN UND ANWENDUNG DAVON
FILM DE CRISTAL DE SCINTILLATION PIXÉLISÉ ET PROCÉDÉ DE PRÉPARATION ET APPLICATION DE CELUI-CI

(43) Date of publication of application: 25.03.2015
(73) Proprietor: Jilin Ray-Image Technology Co., Ltd., Changchun, Jilin 130022 (CN)
(72) Inventor: LI, Qiuying, Changchun Jilin 130021 (CN); YU, Bo, Harbin Heilongjiang 150076 (CN); YU, Hongbo, Changchun Jilin 130021 (CN)
(74) Representative: V.O.
(86) International application number: PCT/CN2012/075570
(87) International publication number: WO 2013/170455

(56) References cited:
- WO-A1-90/02961
- WO-A2-2011/093176
- WO-A2-2011/093176
- JP-A- 2004 317 300
- JP-A- 2004 317 300
- US-A- 5 302 423
- US-B1- 6 177 236

## Description

### TECHNICAL FIELD

The present invention relates to a crystal film, and particularly to a pixelized scintillation crystal film, and a preparation method and application thereof.

### BACKGROUND ART

A scintillation material is a kind of material which converts visually invisible electromagnetic waves (e.g. ultraviolet light, gamma rays or X-rays, etc.) into visible light. Currently, detection and imaging technologies focused on scintillation materials have been widely applied to areas such as nuclear medicine, safety inspection, industrial nondestructive flaw detection, high energy physics and astrophysics. However, visible light generated after scintillation materials absorb electromagnetic waves is divergent, which severely reduces the spatial resolution during imaging.

Previously, to solve the above problem, a scintillation material was prepared into a scintillation crystal film having a micro-columnar structure by controlling process conditions using a vacuum deposition technology (Detector utilizing a scintillator and photoconductive material, US Patent 3,275,827, 1965), and visible light generated was confined within a micro-columnar crystal to reduce light divergence. However, crystal micro-columns are adhered to each other such that the micro-columns are restricted in high resolution detection.

In recent years, in order to improve the spatial resolution of a scintillation material during imaging, the scintillation material has mostly been prepared into a pixelated film, and integrated with an optoelectronic detection system, such as a charge coupled device (CCD) sensor, a photodiode-film transistor detector array, a complementary metal-oxide-semiconductor (CMOS) image sensor and the like, thereby finally realizing high resolution digital detection.

Currently, there are mainly the following three technical solutions for pixelization of a scintillation material film: 1) a substrate surface is processed in advance to form a protruding island structure, each isolated island serves as one pixel unit, and the shadow shielding effect formed by protruding islands is utilized in the vacuum deposition process to cause the scintillation material to only grow on the islands to form a crystal, and not growing in cracks among the islands (Process of making structured x-ray phosphor screen, US Patent 4,069,355, 1978), thereby finally obtaining a pixelized scintillation crystal film; 2) a complete scintillation crystal film is first prepared, the complete scintillation crystal film is then etched using laser ablation technology or the like to form grooves, and the remaining scintillation crystal film forms pixel units separated from each other (Method for fabricating pixelized phosphors, US Patent 5,302,423, 1994), thereby realizing a pixelated scintillation crystal material film; and 3) a substrate is prepared beforehand into an array with a deep-well structure, a scintillation material is then filled into the deep wells (Method of making a pixelized scintillation layer and structures incorporating same, US Patent 6,177,236B1, 2001), and each deep well filled with the scintillation material serves as one pixel unit. JP2004317300 likewise discloses filling grooves made in a scintillation layer, mentioning various filling materials, including X-ray light emitting phosphor particles.

However, the above technical solutions have, respectively, the following disadvantages:
Solution 2: a laser ablation apparatus is expensive with a complex process and a low yield;
Solution 3: substrate materials have strict requirements, a process for preparing a microporous structure is complex, and micropores are not easily fully filled with the scintillation material.

Thus, there is still a need for the development of a pixelized scintillation crystal film with a high spatial resolution and a simple preparation process.

### SUMMARY OF THE INVENTION

To achieve the above objective, the inventors have conducted an intensive study, unexpectedly finding that a surface-induced self-isolation method, which is an original creation of the present invention, can effectively weaken and prevent visible light generated by scintillation crystals in pixel units from reaching adjacent pixel units, and its method is simple and does not require an expensive laser ablation apparatus.

A first aspect of the present invention provides a pixelized scintillation crystal film according to claim 1.

A second aspect of the invention provides a method for preparing the pixelized scintillation crystal film, according to claim 8.

A third aspect of the invention provides use of the pixelized scintillation crystal film in ultraviolet detection, gamma ray detection and X-ray detection.

A surface-induced self-isolation pixelized scintillation crystal film provided by the invention can effectively improve the spatial resolution during film imaging, has a simple preparation process, and can be easily integrated with an existing optoelectronic detection system to realize digital detection.

### BRIEF DESCRIPTION OF DRAWINGS

Fig. 1 is a schematic view of a surface of a surface pixelized substrate;
Fig. 2 is an enlarged schematic view of a partial surface of Fig. 1;
Fig. 3 is a schematic view of a sectional structure of a surface-induced self-isolation pixelized scintillation crystal film;
Fig. 4 is a schematic view of a process for preparing a pixelized scintillation crystal film according to one particular embodiment of the invention;
Fig. 5 is a schematic view of a process for preparing a pixelized scintillation crystal film according to another particular embodiment of the invention;
Fig. 6 is a schematic view of a process for preparing a pixelized scintillation crystal film according to yet another particular embodiment of the invention;
Fig. 7 is a schematic view of a process for preparing a pixelized scintillation crystal film according to yet another particular embodiment of the invention;
Fig. 8 is a transmission optical micrograph of a cesium iodide (doped with thallium iodide) crystal film in Example 1 when incident light is vertically transmitted;
Fig. 9 is a transmission optical micrograph of the corresponding film of Fig. 8 which is inclinedly rotated at 45°;
Fig. 10 is a sectional scanning electron micrograph of the corresponding film of Fig. 8;
Fig. 11 is a transmission optical micrograph of a cesium iodide (doped with thallium iodide) crystal film prepared according to a method described in Example 1, wherein surfaces of pixel unit areas are of glass and surfaces of isolation belts are of polyvinyl alcohol (PVA);
Fig. 12 is a sectional scanning electron micrograph of the corresponding film of Fig. 11;
Fig. 13 is a transmission spectrogram of a 30 µm thick CsI:TlI (10000:8) film respectively subjected to vacuum deposition on glass and polyvinyl alcohol surfaces under the same conditions according to conditions described in Example 1;
Fig. 14 is X-ray diffraction patterns of the two corresponding films of Fig. 13;
Fig. 15 is a sectional scanning electron micrograph of a scintillation crystal film prepared in Example 7;
Fig. 16 is a transmission optical micrograph of a scintillation crystal film prepared in Example 13; and
Fig. 17 is a transmission optical micrograph of a scintillation crystal film prepared in Example 19.

### DETAILED DESCRIPTION OF THE PREFERRED EMBODIMENTS

Unless otherwise specified, the term "pixelized" in the present invention means that a scintillation material is prepared into pixel units separated from each other, wherein visible light generated by the scintillation material in the pixel units does not interfere with adjacent pixel units to achieve a high spatial resolution.

The term "scintillation crystal" refers to a crystal formed by a scintillation material.

The term "pixel unit area" refers to such an area that a scintillation crystal growing in the area serves as a pixel unit.

The term "pixel unit" refers to a scintillation crystal corresponding to the minimum complete sampling of a resulting image when a scintillation crystal film is imaged.

The term "isolation belt area" refers to an area between pixel unit areas, wherein at least one isolation belt exists in an isolation belt area between adjacent pixel unit areas.

The term "isolation belt" refers to an area in an isolation belt area which has surface properties different from those of a pixel unit area.

The term "surface-induced" means that scintillation crystals growing on materials are induced to have different morphologies due to different surface properties of the materials.

The term "different morphologies" means that film-forming crystals exhibit morphological differences in films due to different crystal structures, geometries or stacking manners, and particularly may exhibit (but are not limited to) at least one of the following:
1. The number of diffraction peaks in X-ray diffraction patterns of films is not exactly the same;
2. The position of diffraction peaks in X-ray diffraction patterns of films is not exactly the same; and
3. The films have different optical properties, for example, different transmittance for visible light.

The term "wettability" refers to a description for the degree of extension of liquid on a solid surface when liquid contacts it.

A first aspect of the present invention provides a pixelized scintillation crystal film, comprising: a surface pixelized substrate having a surface formed by pixel unit areas separated from each other and isolation belt areas located between pixel units; and scintillation crystals located on the surface pixelized substrate; characterized in that the scintillation crystal on the pixel unit areas has a first morphology, at least one isolation belt exists in the isolation belt area, and the scintillation crystal on the isolation belt has a morphology different from the first morphology. The isolation belt area between every two adjacent pixel units may comprise one or more isolation belts, wherein the length and/or width of these isolation belts may be the same or different. The isolation belt areas at different positions may have the same or different number of isolation belts.

Accordingly, the pixelized scintillation crystal film of the present invention comprises:
a surface pixelized substrate having a surface formed by pixel unit areas separated from each other and isolation belt areas located between the pixel unit areas, the isolation belt area between every two adjacent pixel unit areas independently comprising n isolation belts, wherein n is an integer greater than or equal to 1, and the number n of the isolation belts in each of the isolation belt areas may be the same or different; and
scintillation crystals located on the surface pixelized substrate;
characterized in that: the scintillation crystal on the pixel unit areas has a first morphology, the scintillation crystal on the isolation belts has a second morphology to a (n+1)^{th} morphology, and the first morphology is different from the second morphology to the (n+1)^{th} morphology which may be the same or different, wherein n is defined as above.

In the present invention, the materials of the substrate are not particularly limited. Examples of materials useful as the substrate of the invention include but are not limited to glass, ceramics, metals, metal oxides, polymers, silicon dioxide, graphite, silicon nitride, charge coupled device sensors, photodiode-film transistor detector arrays and complementary metal-oxide-semiconductor image sensors. In the present invention, the transparency of the substrate is not particularly required, but a transparent substrate is preferred.

According to certain preferred embodiments, the pixel unit areas and the isolation belt areas have different surface properties such that a scintillation material grows on the above two surfaces under the same conditions to obtain crystals having different morphologies, wherein the visible light transmittance of the crystal having a first morphology formed on the pixel unit areas is higher than that of the crystal having a second morphology to a (n+1)^{th} morphology formed on the isolation belts. According to certain particularly preferred embodiments, surface properties of the pixel units and the isolation belts should allow that the transmittance of the crystal having a first morphology formed on the pixel units is higher than the transmittance of the crystal having a second morphology to a (n+1)^{th} morphology formed on the isolation belts which is measured under the same conditions by at least 1%, preferably at least 1.5%, more preferably at least 2%, further preferably at least 2.5% and most preferably at least 3% based on the absolute difference in transmittance. For example, regarding the transmittance of two scintillation crystal films having a thickness of 30 µm growing under the same conditions for visible light having a wavelength of 550 nm, the transmittance of the crystal on the pixel units is higher than the transmittance of the crystal on the isolation belts by at least 1%, preferably at least 1.5%, more preferably at least 2%, further preferably at least 2.5% and most preferably at least 3%.

Geometries of the pixel unit areas are not particularly limited and can be designed according to specific application requirements. For example, according to certain preferred embodiments, the geometry may be any one or more of a rectangle, a square, a triangle or a hexagon. Geometries of the pixel units also may be provided with round angles (i.e. not right angles), such as rectangles, squares, triangles and hexagons with round angles, etc., or even possibly stadium-like shapes (i.e. a semicircle at both sides and a rectangle in the middle). According to certain more preferred embodiments, any side of a geometry of the pixel units has a length of not less than 10 microns and not greater than 500 microns, more preferably 15-300 microns, further preferably 20-250 microns, and most preferably 25-150 microns.

The width of the isolation belt areas and the width of the isolation belts in the isolation belt areas are not particularly limited as long as the width can effectively isolate visible light generated by a scintillation material in the adjacent pixel units. According to certain preferred embodiments, the isolation belt area between the adjacent pixel units has a width of not less than 1 micron and not greater than 50 microns, more preferably 2-40 microns, further preferably 3-30 microns, and most preferably 4-20 microns; and the isolation belts in the isolation belt areas have a width of not less than 1 micron and not greater than 50 microns, more preferably 2-40 microns, further preferably 3-30 microns, and most preferably 4-20 microns.

The isolation belts at different positions may have the same or different width which is not particularly limited. However, for considerations of operability, the isolation belts at different positions preferably have substantially the same width. In the present invention, the number of isolation belts is not particularly limited. More than one isolation belt may be arranged in all or part of the isolation belt areas. In the present invention, geometries of the isolation belts are not particularly limited, but must ensure that each pixel unit area is independently located inside the minimum closed geometry enclosed by the isolation belts, wherein no closed geometry enclosed by the isolation belts exists inside the "minimum closed geometry"; and when only one isolation belt exists in an isolation belt area, the geometry and size of the isolation belt are consistent with those of the isolation belt area where the isolation belt is located.

The type of surface materials of pixel unit areas and surface materials of isolation belts is not particularly limited, but their surface materials should allow that the morphology of the scintillation crystal formed on the pixel unit areas is different from that of the scintillation crystal formed on the isolation belts.

While not wishing to be bound by any theory, it is believed that when the wettability between surfaces of pixel unit areas and a scintillation material to grow thereon is better than the wettability between surfaces of isolation belts and the scintillation material, it is favorable to form scintillation crystals having different morphologies on the pixel unit areas and the isolation belts, and the scintillation crystal formed on the pixel unit areas has higher transmittance while the crystal formed on the isolation belts can effectively isolate visible light generated by a scintillation material in pixel units. According to certain preferred embodiments, the surfaces of the pixel unit areas may be made of any material having good wettability with a scintillation material. For example, the material may be any one selected from glass, ceramics, metals, metal oxides, polymers, silicon dioxide, graphite, silicon nitride and silicon, or a mixture of more than one thereof. Correspondingly, the surfaces of the isolation belts may be made of any material having poorer wettability with a scintillation material, for example, the surfaces of the isolation belts may be made of either a polymeric material having hydroxyl or carboxyl at side chains, or a polymeric material having hydroxyl or carboxyl at side chains which is partially or fully converted from a polymeric material originally without carboxyl or hydroxyl at side chains on the surfaces of the isolation belts by means of a chemical reaction and the like.

In the present invention, materials for forming the scintillation crystals are not particularly limited. Examples of these materials include but are not limited to any one of cesium iodide, sodium iodide, cesium bromide, lithium iodide and bismuth germanate or a mixture of more than one thereof, preferably any one of cesium iodide, sodium iodide and bismuth germanate or a mixture of more than one thereof, and more preferably any one of cesium iodide and sodium iodide or a mixture of both. According to certain preferred embodiments, the scintillation crystals may contain a dopant material so as to improve the luminous efficiency of the scintillation crystals. Examples of the dopant material include but are not limited to one of thallium iodide, europium bromide, sodium iodide and europium iodide, or a mixture of more than one thereof. According to certain preferred embodiments, a scintillation crystal material-dopant material combination may be any one of cesium iodide-sodium iodide, cesium iodide-thallium iodide, sodium iodide-thallium iodide, cesium bromide-europium bromide and lithium iodide-europium iodide. According to some other embodiments, a scintillation crystal material-dopant material combination may comprise a plurality of scintillation crystal materials and/or a plurality of dopant materials.

The molar ratio of the scintillation crystal material and the dopant material is not particularly limited and can be determined according to the luminous efficiency of the scintillation crystals to be achieved. According to certain preferred embodiments, the scintillation crystal material and the dopant material have a molar ratio of not less than 100:1 and not greater than 10000:1, more preferably (150-8000):1, further preferably (200-5000):1, and most preferably (1000-2000):1.

In order to improve the light utilization efficiency of the pixelized scintillation crystal film, a reflective substance or a substance having a refractive index smaller than the scintillation crystals used is covered and filled at one side of the substrate where no scintillation crystal grows or on a scintillation crystal surface and in a scintillation crystal gap.

According to certain preferred embodiments, at least one layer of a reflective material may be covered at one side of the substrate where no scintillation crystal grows or on a surface of the pixelized scintillation crystal film, and a gap in the film may be partially or fully filled with the reflective material, wherein the reflective material is used for reducing the loss of visible light generated by excitation of the scintillation crystals. Examples of reflective materials useful in the present invention include but are not limited to aluminum and silver. The thickness of a reflective material film is not particularly limited and can be determined according to the reflective effect to be achieved, for example, the thickness may be greater than 50 nm, preferably greater than 100 nm, and more preferably greater than 200 nm. Preferably, the thickness of a reflective material film is not greater than 1000 nm.

According to certain preferred embodiments, at least one layer of a low-refractive index material may be covered at one side of the substrate where no scintillation crystal grows or on the surface of the pixelized scintillation crystal film, and a gap in the film may be partially or fully filled with the low-refractive index material, wherein the low-refractive index material is used for reducing the loss of visible light generated by excitation of the scintillation crystals, and the refractive index of the low-refractive index material is smaller than that of the scintillation crystals used. Examples of low-refractive index materials useful in the present invention include but are not limited to titanium dioxide and silicon dioxide. The thickness of a low-refractive index material film is not particularly limited and can be determined according to the effect to be achieved, for example, the thickness may be greater than 50 nm, preferably greater than 100 nm, and more preferably greater than 200 nm. Preferably, the thickness of a low-refractive index material film is not greater than 1000 nm.

According to some other embodiments, the surface of the pixelized scintillation crystal film may be either respectively covered with at least one layer of a reflective material and at least one layer of a low-refractive index material, or covered with at least one layer of a mixture consisting of the reflective material and the low-refractive index material.

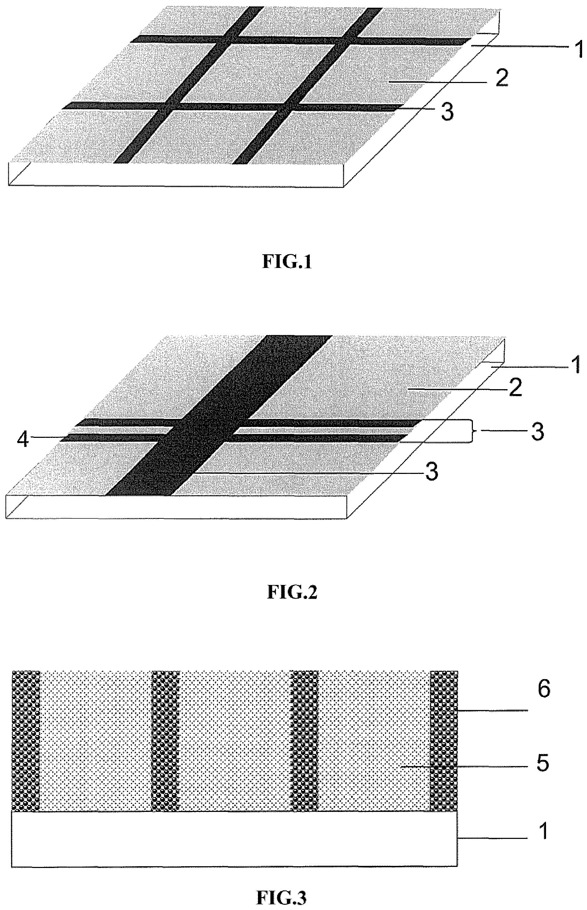

Fig. 1 is a schematic view of a surface of a surface pixelized substrate, wherein 1 represents the surface pixelized substrate, the surface of which is formed by pixel unit areas 2 and isolation belt areas 3 located between the pixel unit areas.

Fig. 2 is an enlarged schematic view of a partial surface of the surface pixelized substrate, wherein at least one isolation belt 4 exists in the isolation belt area 3 and surface properties of the isolation belt are different from those of the pixel unit areas.

Fig. 3 is a sectional schematic view of a surface-induced self-isolation pixelized scintillation crystal film according to certain embodiments of the invention, wherein 1 represents the surface pixelized substrate, and 5 and 6 respectively represent a scintillation crystal growing on surfaces of the pixel unit areas and isolation belts. The term "surface-induced" means that the scintillation crystal 5 obtained by growing a scintillation material on the pixel unit areas 2 and the scintillation crystal 6 obtained by growing the scintillation material on the isolation belts 4 are induced to have different morphologies due to different surface properties of the pixel unit areas 2 and the isolation belts 5 on the surface pixelized substrate 1. The surfaces of the pixel unit areas 2 have good wettability with the scintillation material, and the contact angle therebetween is smaller than 90° such that the scintillation material easily grows to form a crystal having an upright columnar structure; and the surfaces of the isolation belts 4 have poor wettability with the scintillation material, and the contact angle therebetween is greater than 90° such that the scintillation material does not easily grow to form the crystal having an upright columnar structure. The term "self-isolation" means that scintillation crystals prepared on the surface pixelized substrate 1 can simultaneously grow to form two crystals having different morphologies under the induction of a substrate surface, thus providing a simple preparation process. The scintillation crystal 6 growing on the isolation belts 4 has obvious optical isolation effects and its spatial size is as small as nanoscale, thereby achieving the effect of improving the spatial resolution of the film. Meanwhile, the sensitivity during film imaging also can be improved by an optical signal generated by the isolation belts.

While not wishing to be bound by any theory, it is believed that the cause of optical isolation may lie in the following several aspects:
1. since the scintillation crystal 5 on the pixel unit areas 2 and the scintillation crystal 6 on the isolation belts 4 have different morphologies (for example, in certain solutions, the former is of an upright columnar structure while the latter is of an inclined or curved columnar structure), cracks are produced in the vicinity of an interface between the two structures in the temperature increasing and decreasing process of film preparation, thereby forming a scintillation crystal-air-scintillation crystal interface; and since the refractive index of the scintillation crystals is greater than that of air, visible light generated by the scintillation crystals on the pixel units and the isolation belts is totally reflected upon reaching the scintillation crystal-air interface, and the light is reflected back thereinto, thereby achieving the optical isolation effects;
2. in certain solutions, the scintillation crystal 6 growing on the isolation belts 4 has an inclined or curved structure which may play a role similar to optical lens, can change the propagation direction of light, and can capture light within a very wide range of angles from neighboring pixel units, thereby realizing the effect of isolating light interference to the neighboring pixel units;
3. in certain solutions, the scintillation crystal 6 growing on the isolation belts 4 has an inclined or curved structure which may play a role similar to optical fiber, can converge and transmit light generated by the scintillation crystal growing on the isolation belts to the isolation belts and neighboring pixel units, and can make full use of an optical signal generated by the scintillation crystal growing on the isolation belts, thereby achieving the effect of improving sensitivity; and
4. in certain solutions, the scintillation crystal 6 growing on the isolation belts 4 has poor optical transmissibility and therefore hinders the propagation of visible light generated by the scintillation crystal in adjacent pixel units, thereby achieving the optical isolation effects.

A second aspect of the invention provides a method for preparing the pixelized scintillation crystal film, comprising:
(1) providing a surface pixelized substrate consisting of pixel unit areas and isolation belt areas, wherein surfaces of the pixel unit areas are suitable for the growth of a crystal having a first morphology, and the isolation belt area between the adjacent pixel unit areas comprises n isolation belts, wherein n is an integer greater than or equal to 1, surfaces of the isolation belts are suitable for the growth of a crystal having a morphology different from the first morphology, and the number n of the isolation belts in the isolation belt area at a different position may be the same or different; and
(2) growing a crystal having a first morphology on surfaces of the pixel unit areas, and growing a crystal having a second morphology to a (n+1)^{th} morphology different from the first morphology on surfaces of the isolation belts, wherein n is defined as above, and the second morphology to the (n+1)^{th} morphology may be the same or different.

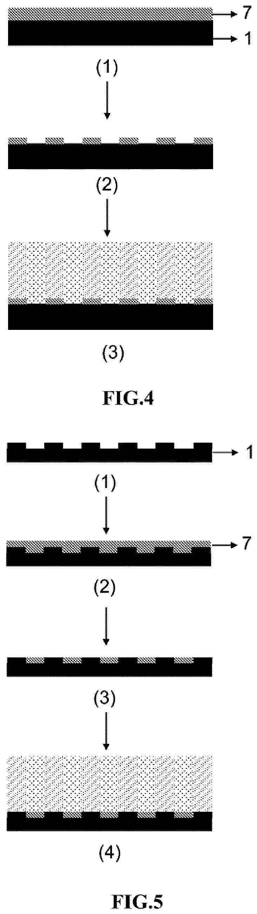

According to certain preferred embodiments (as shown in Fig. 4, hereinafter referred to as Solution 1, for the sake of understanding, the geometry and size of the isolation belt used in Fig. 4 are exactly the same as those of the isolation belt area, but may be different during implementation), the method for preparing the pixelized scintillation crystal film according to the invention comprises the steps of:
(1) covering a substrate surface with at least one layer of a surface material 7 capable of improving or reducing the wettability between the substrate surface and a scintillation material;
(2) removing part of the surface material 7 using a mask etching technology to expose a corresponding part of the substrate surface, thereby forming a surface pixelized substrate consisting of pixel unit areas and isolation belt areas; and
(3) growing scintillation crystals formed by the scintillation material and an optional dopant material on the surface pixelized substrate to form the pixelized scintillation crystal film.

According to certain preferred embodiments (as shown in Fig. 5, hereinafter referred to as Solution 2, for the sake of understanding, the geometry and size of the isolation belt used in Fig. 5 are exactly the same as those of the isolation belt area, but may be different during implementation), the method for preparing the pixelized scintillation crystal film according to the invention comprises the steps of:
(1) processing a substrate surface into a desired pixelated graphic using a mask etching technology;
(2) covering the substrate surface formed in (1) with at least one layer of a surface material 7 capable of improving or reducing the wettability between the substrate surface and a scintillation material;
(3) removing part of the surface material 7 using an etching technology to expose the substrate surface, thereby forming a surface pixelized substrate consisting of pixel unit areas and isolation belt areas; and
(4) growing scintillation crystals formed by the scintillation material and an optional dopant material on the surface pixelized substrate to form the pixelized scintillation crystal film.

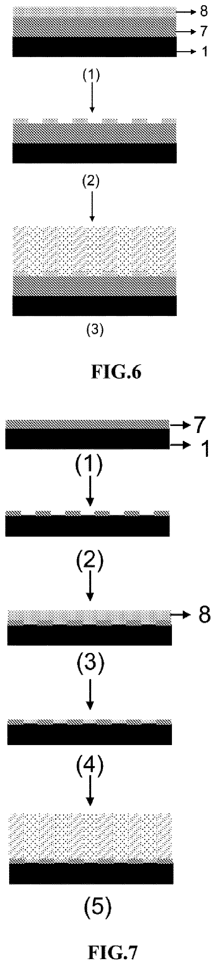

According to certain preferred embodiments (as shown in Fig. 6, hereinafter referred to as Solution 3, for the sake of understanding, the geometry and size of the isolation belt used in Fig. 6 are exactly the same as those of the isolation belt area, but may be different during implementation), the method for preparing the pixelized scintillation crystal film according to the invention comprises the steps of:
(1) sequentially covering a substrate surface with a first surface material 7 and a second surface material 8 capable of improving or reducing the wettability between the first surface material 7 and a scintillation material;
(2) removing part of the first surface material 7 using a mask etching technology to expose a corresponding surface of the second surface material 8, thereby forming a surface pixelized substrate consisting of pixel unit areas and isolation belt areas; and
(3) growing scintillation crystals formed by the scintillation material and an optional dopant material on the surface pixelized substrate to form the pixelized scintillation crystal film.

According to certain preferred embodiments (as shown in Fig. 7, hereinafter referred to as Solution 4, for the sake of understanding, the geometry and size of the isolation belt used in Fig. 7 are exactly the same as those of the isolation belt area, but may be different during implementation), the method for preparing the pixelized scintillation crystal film according to the invention comprises the steps of:
(1) covering a substrate surface with a first surface material 7;
(2) removing part of the first surface material 7 using a mask etching technology to form a pixelated graphic;
(3) covering a substrate formed in (2) with a second surface material 8 capable of improving or reducing the wettability between a surface of the first surface material 7 and a scintillation material;
(4) removing part of the second surface material 8 using an etching technology to expose a corresponding surface of the first surface material 7, thereby forming a surface pixelized substrate consisting of pixel unit areas and isolation belt areas; and
(5) growing scintillation crystals formed by the scintillation material and an optional dopant material on the surface pixelized substrate to form the pixelized scintillation crystal film.

Technologies for growing scintillation material crystals formed by the scintillation material and an optional dopant material on the surface pixelized substrate are not particularly limited in the present invention. For example, a vacuum co-deposition technology can be used to deposit the scintillation material and an optional dopant material on the surface pixelized substrate to form the pixelized scintillation crystal film.

In order to improve the light utilization efficiency of the pixelized scintillation crystal film, a reflective substance or a substance having a refractive index smaller than the scintillation crystals used is covered and filled at one side of the substrate where no scintillation crystal grows or on a scintillation crystal surface and in a scintillation crystal gap.

According to certain preferred embodiments, at least one layer of a reflective material may be covered at one side of the substrate where no scintillation crystal grows or on a surface of the pixelized scintillation crystal film, and a gap in the film may be partially or fully filled with the reflective material, wherein the reflective material is used for reducing the loss of visible light generated by excitation of the scintillation crystals. Examples of reflective materials useful in the present invention include but are not limited to aluminum and silver. The thickness of a reflective material film is not particularly limited and can be determined according to the reflective effect to be achieved, for example, the thickness may be greater than 50 nm, preferably greater than 100 nm, and more preferably greater than 200 nm. Preferably, the thickness of a reflective material film is not greater than 1000 nm.

According to certain preferred embodiments, at least one layer of a low-refractive index material may be covered at one side of the substrate where no scintillation crystal grows or on the surface of the pixelized scintillation crystal film, and a gap in the film may be partially or fully filled with the low-refractive index material, wherein the low-refractive index material is used for reducing the loss of visible light generated by excitation of the scintillation crystals, and the refractive index of the low-refractive index material is smaller than that of the scintillation crystals used. Examples of low-refractive index materials useful in the present invention include but are not limited to titanium dioxide and silicon dioxide. The thickness of a low-refractive index material film is not particularly limited and can be determined according to the effect to be achieved, for example, the thickness may be greater than 50 nm, preferably greater than 100 nm, and more preferably greater than 200 nm. Preferably, the thickness of a low-refractive index material film is not greater than 1000 nm.

According to some other embodiments, the surface of the pixelized scintillation crystal film may be either respectively covered with at least one layer of a reflective material and at least one layer of a low-refractive index material, or covered with at least one layer of a mixture consisting of the reflective material and the low-refractive index material.

A third aspect of the invention provides use of the pixelized scintillation crystal film in ultraviolet detection, X-ray detection and gamma ray detection. The surface-induced self-isolation pixelized scintillation crystal film of the invention can be integrated with an existing optoelectronic detection system, e.g. a charge coupled device sensor (CCD sensor), a photodiode-film transistor detector array, a complementary metal-oxide-semiconductor image sensor (CMOS image sensor) and the like, and therefore can be widely applied to the detection of ultraviolet rays, X-rays, gamma rays, etc.

According to certain embodiments, the pixelized scintillation crystal film of the invention can convert X-rays into visible light, and can be integrated with a charge coupled device sensor, a photodiode-film transistor detector array or a complementary metal-oxide-semiconductor image sensor to realize digital detection.

According to certain embodiments, the pixelized scintillation crystal film of the invention can convert ultraviolet rays into visible light, and can be integrated with a charge coupled device sensor, a photodiode-film transistor detector array or a complementary metal-oxide-semiconductor image sensor to realize digital detection.

According to certain embodiments, the pixelized scintillation crystal film of the invention can convert gamma rays into visible light, and can be integrated with a charge coupled device sensor, a photodiode-film transistor detector array or a complementary metal-oxide-semiconductor image sensor to realize digital detection.

The pixelized scintillation crystal film obtained by a surface-induced self-isolation method invented by the invention can effectively improve the spatial resolution during film imaging, has a simple preparation process, and can be easily integrated with an existing optoelectronic detection system to realize digital detection.

### Examples

Reagents, specifications and sources used in the present invention are listed in Table 1.

**Table 1**

| Name of reagents | Specifications | Sources |
|---|---|---|
| Cesium iodide (CsI) | Purity>99.9% | Nanjing Stable Trading Co., Ltd. |
| Sodium iodide (Nal) | Purity>99.9% | Sigma-Aldrich Corporation |
| Cesium bromide (CsBr) | Purity>99.9% | Sigma-Aldrich Corporation |
| Lithium iodide (LiI) | Purity>99.9% | Sigma-Aldrich Corporation |
| Thallium iodide (TlI) | Purity>99.9% | Sigma-Aldrich Corporation |
| Europium bromide (EuBr) | Purity>99.9% | Sigma-Aldrich Corporation |
| Europium iodide (Eul) | Purity>99.9% | Sigma-Aldrich Corporation |
| Bismuth germinate (Bi₄Ge₃O₁₂) | Purity>99.9% | Sigma-Aldrich Corporation |
| Ammonium dichromate | Analytically pure | Sigma-Aldrich Corporation |
| Polyvinyl alcohol (PVA) | 563900-500G | Sigma-Aldrich Corporation |
| Polymethylmethacrylate (PMMA) | 200336-100G | Sigma-Aldrich Corporation |
| Poly(hydroxyethyl methacrylate) | 529265-5G | Sigma-Aldrich Corporation |
| Photoresist | RZJ-304 | Suzhou Ruihong Electronic Chemicals Co., Ltd. |
| Developing solution | KMPPD238-II | Beijing Kehua Microelectronics Co., Ltd. |
| Acetone | Analytically pure | Beijing Chemical Works |
| Ethanol | Analytically pure | Beijing Chemical Works |
| Hydrochloric acid | Volume fraction, 35% | Beijing Chemical Works |
| Hydrofluoric acid | Volume fraction, 30% | Beijing Chemical Works |

Equipment, model and manufacturers used are listed in Table 2.

**Table 2**

| Name of equipment | Model | Manufacturers |
|---|---|---|
| Optical microscope | BX51 | Olympus Corporation |
| Ultraviolet-visible-infrared spectrometer | Jasco 570 | Jasco Corporation |
| Scanning electron microscope | XL30 | Phillips Corporation |
| X-ray diffractometer | D8 discover | Bruker Corporation |
| Spin coating equipment | KW-4A | Institute of Microelectronics of Chinese Academy of Sciences |
| Plasma equipment | Model SY, 500W | Microelectronics Center of Chinese Academy of Sciences |
| Magnetron sputtering equipment | BLADE-FEV | Dongguan Anwell Digital Machinery Co., Ltd. |

### Example 1

A pixelized scintillation crystal film was prepared by the method for preparing the pixelized scintillation crystal film using a surface-induced self-isolation technology provided in the above-described Solution 1, and the specific process was as follows:
1. 4 g PVA and 4 g ammonium dichromate were sequentially added to 100 g water and formulated into a solution;
2. the solution formulated was coated onto a silicon nitride substrate surface at 3000 rpm for 30 seconds using a spin coating technology;
3. a mask was added to a substrate coated with PVA and exposed to ultraviolet light for 10 seconds, the substrate was placed in 75°C hot water and rinsed for 30 seconds, uncrosslinked PVA was washed off and the silicon nitride surface was exposed, wherein silicon nitride served as pixel unit areas and PVA served as isolation belts; and
4. cesium iodide (CsI) and thallium iodide (TlI) having a molar ratio of 10000:8 were co-deposited onto a pixelated substrate surface at a deposition rate of 60 µm/h for 1 h using a vacuum deposition technology, wherein the substrate temperature was 300°C and the background vacuum degree was 10⁻⁴ Pa.

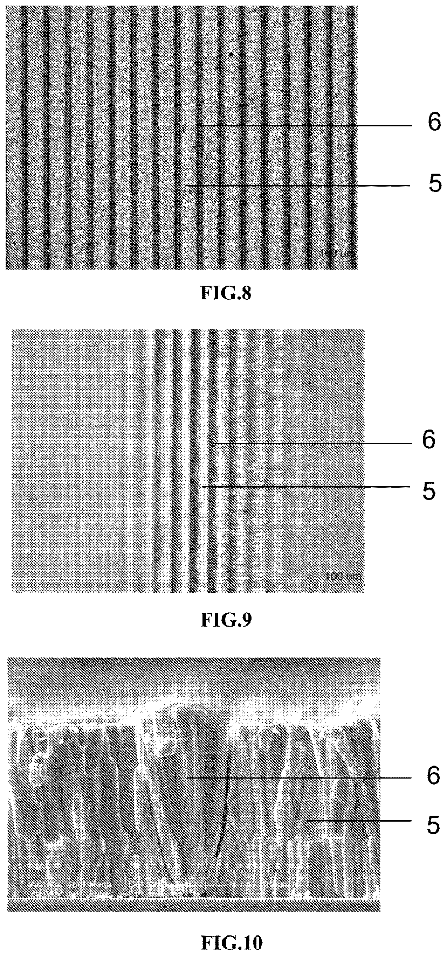

Fig. 8 is a transmission optical micrograph of a CsI:TlI (10000:8) film growing on a silicon nitride substrate surface in accordance with Example 1 (parallel incident light is vertically transmitted to the film), wherein surfaces of pixel unit areas are of silicon nitride, surfaces of isolation belts are of PVA and the width of the isolation belts is 10 microns; and 2 represents a scintillation crystal growing on the surfaces of the pixel unit areas which has better optical transmissibility, and 3 represents a scintillation crystal growing on the surfaces of the isolation belts which has poorer optical transmissibility and can have obvious optical isolation effects.

Fig. 9 is a transmission optical micrograph of the corresponding film of Fig. 8, wherein parallel light is at angle of 45° to the film. 2 represents a scintillation crystal growing on the surfaces of the pixel unit areas which has better optical transmissibility, and 3 represents a scintillation crystal growing on the surfaces of the isolation belts which has poorer optical transmissibility and can have obvious optical isolation effects.

The comparison between Figs. 8 and 9 can show that the scintillation crystal growing on the surfaces of the isolation belts has good isolation effects on visible light at different directions.

From Fig. 8, the spatial resolution of the film is calculated to be 5.5 lp/mm, which is greatly improved as compared with a spatial resolution of 3.5 lp/mm for an existing scintillation crystal film.

Fig. 10 is a sectional scanning electron micrograph of the corresponding film of Fig. 8, wherein 2 represents a scintillation crystal growing on the surfaces of the pixel unit areas, 3 represents a scintillation crystal growing on the surfaces of the isolation belts, the two crystals have significant differences in morphology, and it can be observed that cracks resulting from different internal stress of the two crystals are produced at an interface between the two crystals.

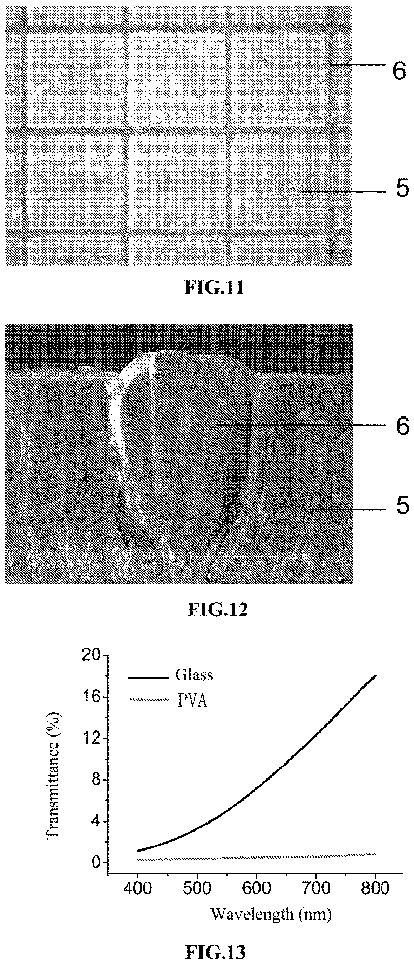

Fig. 11 is a transmission optical micrograph of a CsI:TlI (10000:8) film growing on a glass substrate surface in accordance with the method described in Solution 1, wherein surfaces of pixel unit areas are of glass, surfaces of isolation belts are of PVA, and the width of the isolation belts is respectively 50 and 35 microns; and 2 represents a scintillation crystal growing on the surfaces of the pixel unit areas which has better optical transmissibility, and 3 represents a scintillation crystal growing on the surfaces of the isolation belts which has poorer optical transmissibility.

Fig. 12 is a sectional scanning electron micrograph of the corresponding film of Fig. 11, wherein 2 represents a scintillation crystal growing on the surfaces of the pixel unit areas, 3 represents a scintillation crystal growing on the surfaces of the isolation belts, the two crystals have significant differences in morphology, and it can be observed that cracks resulting from different internal stress of the two crystals are produced at an interface between the two crystals.

Fig. 13 is a transmission spectrogram of a 30 µm thick CsI:TI (10000:8) film respectively subjected to vacuum deposition on glass and PVA surfaces under the same conditions. It can be seen from the Figure that two scintillation crystal films having different morphologies growing on two surfaces under the same conditions have different transmittance. For example, the transmittance of the two scintillation crystal films having a thickness of 30 µm for visible light having a wavelength in the range of 400-800 nm has a difference of not lower than 1%. For visible light having a wavelength of 550 nm to which a silicon photodetector is most sensitive, the transmittance difference is up to about 4%.

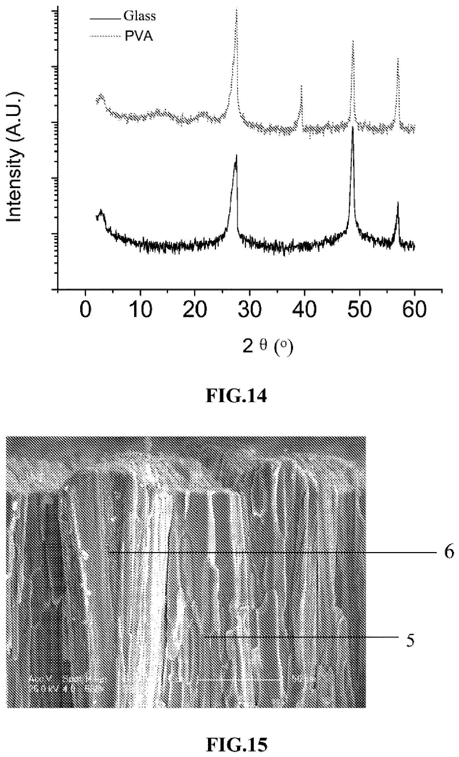

Fig. 14 is X-ray diffraction patterns of the two corresponding films of Fig. 13. It can be seen from the Figure that the scintillation crystal film growing on the PVA surface has 4 obvious diffraction peaks while the scintillation crystal film growing on the glass surface has 3 obvious diffraction peaks. Meanwhile, the intensity of the diffraction peaks at the same position in the two films is also different. The presence of the diffraction peaks indicates that a scintillation material forms crystals in the films, and the differences in the position and intensity of the diffraction peaks indicate that the composition and stacking manners of the crystals in the two films are different.

### Examples 2-6

Table 3 lists a series of technical parameters of the pixelized scintillation crystal film prepared according to the process described in Example 1, wherein:
aluminum and silver were subjected to vacuum deposition, wherein the background vacuum degree was 10⁻⁴ Pa and the deposition thickness was 200 nm; and
titanium dioxide and silicon dioxide were subjected to magnetron sputtering for 5 min, wherein the oxygen flow rate was 20 sccm, the argon flow rate was 50 sccm and the sputtering power was 3000 W.

**Table 3**

| Size of pixel units (unit: micron) | Width of isolation belts (unit: micron) | Host materials | Dopants | Molar ratio of host material to dopant | Reflective materials | Low-refractive index materials |
|---|---|---|---|---|---|---|
| 500×500 | 50 | CsI | NaI | 1000:3 | None | Silicon dioxide |
| 160×190 | 15 | NaI | TlI | 10000:1 | None | Titanium dioxide |
| 10×10 | 1 | CsBr | EuBr | 100:1 | Silver | None |
| 320×240 | 25 | LiI | EuI | 1000:6 | Alumi num | None |
| 143×143 | 10 | Bismuth germanate | None | - | None | None |

It can be observed from the above experimental results that the scintillation crystals growing on the surfaces of the pixel units and the isolation belts have different morphologies, and meanwhile the scintillation crystal film significantly enhances the reflection of visible light due to the introduction of a reflective material or a low-refractive index material.

### Example 7

A pixelized scintillation crystal film was prepared by the method for preparing the pixelized scintillation crystal film using a surface-induced self-isolation technology provided in the above-described Solution 2, and the specific process was as follows:
1. an Al substrate surface was coated with one layer of a photoresist at 3000 rpm for 30 seconds using a spin coating process, baked at 80°C for 10 min, then added with a mask, exposed to ultraviolet light for 10 seconds, soaked in a photoresist stripping solution for 10 seconds for photoresist stripping, washed with clean water and then baked; a baked substrate was soaked in hydrochloric acid having a volume fraction of 10% for 2 min and then taken out, residual hydrochloric acid was washed off with clean water, and then the substrate surface was blown dry with nitrogen; and the above substrate was soaked in acetone, rinsed for 30 seconds and then taken out, and the substrate surface was blown dry with nitrogen;
2. the substrate surface obtained in step 1 was coated with one layer of poly(hydroxyethyl methacrylate) at 3000 rpm for 30 seconds using a spin coating process, and baked at 150°C for 30 min; and poly(hydroxyethyl methacrylate) was formulated into a solution having a mass fraction of 2% with ethanol as a solvent before use;
3. part of poly(hydroxyethyl methacrylate) was removed using an oxygen plasma etching technology to expose Al and hence form pixel unit areas, and the remaining poly(hydroxyethylmethacrylate) formed isolation belts, wherein the oxygen flow rate was 100 sccm, the power was 100 W and the etching time was 3 min; and
4. cesium iodide (CsI) and thallium iodide (TlI) having a molar ratio of 10000:8 were co-deposited onto a pixelated substrate surface at a deposition rate of 60 µm/h for 1 h using a vacuum deposition technology, wherein the substrate temperature was 300°C and the background vacuum degree was 10⁻⁴ Pa.

Fig. 15 is a sectional scanning electron micrograph of the scintillation crystal film prepared in Example 7. 2 represents a scintillation crystal growing on the pixel unit areas and 3 represents a scintillation crystal growing on the isolation belts. The scintillation crystals growing on two different surfaces have different morphologies, and cracks are produced at an interface therebetween.

### Examples 8-12

Table 4 lists a series of technical parameters of the pixelized scintillation crystal film prepared according to the process described in Example 7, wherein:
aluminum and silver were subjected to vacuum deposition, wherein the background vacuum degree was 10⁻⁴ Pa and the deposition thickness was 200 nm; and
titanium dioxide and silicon dioxide were subjected to magnetron sputtering for 5 min, wherein the oxygen flow rate was 20 sccm, the argon flow rate was 50 sccm and the sputtering power was 3000 W.

**Table 4**

| Size of pixel units (unit: micron) | Width of isolation belts (unit: micron) | Host materials | Dopants | Molar ratio of host material to dopant |
|---|---|---|---|---|
| 500×500 | 50 | CsI | NaI | 1000:3 |
| 160×190 | 15 | NaI | TlI | 10000:1 |
| 10×10 | 1 | CsBr | EuBr | 100:1 |
| 320×240 | 25 | LiI | EuI | 1000:6 |
| 143×143 | 10 | Bismuth germanate | None | - |

It can be observed from the above experimental results that the scintillation crystals growing on the surfaces of the pixel units and the isolation belts have different morphologies.

### Example 13

A pixelized scintillation crystal film was prepared by the method for preparing the pixelized scintillation crystal film using a surface-induced self-isolation technology provided in the above-described Solution 3, and the specific process was as follows:
1. a surface of a photodiode-film transistor detector array was coated with one layer of PMMA at 3000 rpm for 30 seconds using a spin coating process, and baked at 80°C for 10 min; and PMMA was formulated into a solution having a mass fraction of 2% with acetone as a solvent before use;
2. 4 g PVA and 4 g ammonium dichromate were sequentially added to 100 g water and formulated into a solution;
3. the solution formulated was coated onto a PMMA surface at 3000 rpm for 30 seconds using a spin coating technology;
4. a mask was added to a substrate coated with PVA and exposed to ultraviolet light for 10 seconds, the substrate was placed in 75°C hot water and rinsed for 30 seconds, uncrosslinked PVA was washed off and the PMMA surface was exposed, wherein PMMA served as pixel unit areas and PVA served as isolation belts; and
5. cesium iodide (CsI) and thallium iodide (TlI) having a molar ratio of 10000:8 were co-deposited onto a pixelated substrate surface at a deposition rate of 60 µm/h for 1 h using a vacuum deposition technology, wherein the substrate temperature was 300°C and the background vacuum degree was 10⁻⁴ Pa.

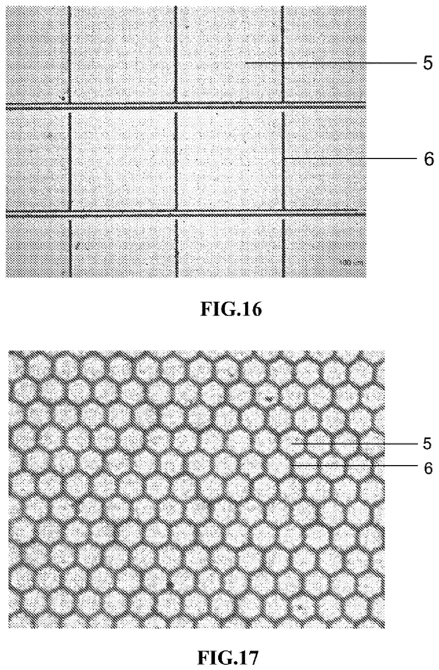

Fig. 16 is a transmission optical micrograph of the scintillation crystal film obtained in Example 13, wherein 2 represents a scintillation crystal growing on the PMMA surface which has good light transmissibility, and 3 represents a scintillation crystal growing on the PVA surface which has poor light transmissibility and can have optical isolation effects. Meanwhile, two isolation belts formed of PVA exist in a horizontal isolation belt area and only one isolation belt formed of PVA exists in a vertical isolation belt area as required.

### Examples 14-18

Table 5 lists a series of technical parameters of the pixelized scintillation crystal film prepared according to the process described in Example 13, wherein:
aluminum and silver were subjected to vacuum deposition, wherein the background vacuum degree was 10⁻⁴ Pa and the deposition thickness was 200 nm; and
titanium dioxide and silicon dioxide were subjected to magnetron sputtering for 5 min, wherein the oxygen flow rate was 20 sccm, the argon flow rate was 50 sccm and the sputtering power was 3000 W.

**Table 5**

| Size of pixel units (unit: micron) | Width of isolation belts (unit: micron) | Host materials | Dopants | Molar ratio of host material to dopant | Reflective materials | Low-refractive index materials |
|---|---|---|---|---|---|---|
| 500×500 | 50 | CsI | NaI | 1000:3 | None | Silicon dioxide |
| 160×190 | 15 | NaI | TlI | 10000:1 | None | Titanium dioxide |
| 10×10 | 1 | CsBr | EuBr | 100:1 | Silver | None |
| 320×240 | 25 | LiI | EuI | 1000:6 | Aluminum | None |
| 143×143 | 10 | Bismuth germanate | None | - | None | None |

It can be observed from the above experimental results that the scintillation crystals growing on the surfaces of the pixel units and the isolation belts have different morphologies, and meanwhile the scintillation crystal film significantly enhances the reflection of visible light due to the introduction of a reflective material or a low-refractive index material.

### Example 19

A method for preparing a surface-induced self-isolation pixelized scintillation crystal film provided by the invention was performed using Solution 4, and the specific process was as follows:
1. one layer of silicon dioxide was sputtered on a glass substrate surface for 2 min, wherein the oxygen flow rate was 20 sccm, the argon flow rate was 50 sccm and the sputtering power was 3000 W;
2. a silicon dioxide surface was coated with one layer of a photoresist at 3000 rpm for 30 seconds using a spin coating process, baked at 80°C for 10 min, then added with a mask, exposed to ultraviolet light for 10 seconds, soaked in a photoresist stripping solution for 10 seconds for photoresist stripping, washed with clean water and then baked; a baked substrate was soaked in hydrofluoric acid having a volume fraction of 10% for 2 min and then taken out, residual hydrofluoric acid was washed off with clean water, and then the substrate surface was blown dry with nitrogen; and the above substrate was soaked in acetone, rinsed for 30 seconds and then taken out, and the substrate surface was blown dry with nitrogen;
3. the substrate surface obtained in step 1 was coated with one layer of polyvinyl alcohol at 3000 rpm for 30 seconds using a spin coating process, and baked at 150°C for 30 min; and polyvinyl alcohol was formulated into an aqueous solution having a mass fraction of 4% before use;
4. part of polyvinyl alcohol was removed using an oxygen plasma etching technology to expose silicon dioxide and hence form pixel unit areas, and the remaining polyvinyl alcohol formed isolation belts, wherein the oxygen flow rate was 100 sccm, the power was 100 W and the etching time was 3 min; and
5. cesium iodide (CsI) and thallium iodide (TlI) having a molar ratio of 10000:8 were co-deposited onto a pixelated substrate surface at a deposition rate of 60 µm/h for 1 h using a vacuum deposition technology, wherein the substrate temperature was 300°C and the background vacuum degree was 10⁻⁴ Pa.

Fig. 17 is a transmission optical micrograph of the film obtained in Example 19, wherein 2 represents a scintillation crystal growing on the silicon dioxide surface which has good light transmissibility, and 3 represents a scintillation crystal growing on the polyvinyl alcohol surface which has poor light transmissibility and can have optical isolation effects.

### Examples 20-24

Table 6 lists a series of technical parameters of the pixelized scintillation crystal film prepared according to the process described in Example 19, wherein:
aluminum and silver were subjected to vacuum deposition, wherein the background vacuum degree was 10⁻⁴ Pa and the deposition thickness was 200 nm; and
titanium dioxide and silicon dioxide were subjected to magnetron sputtering for 5 min, wherein the oxygen flow rate was 20 sccm, the argon flow rate was 50 sccm and the sputtering power was 3000 W.

**Table 6**

| Size of pixel units (unit: micron) | Width of isolation belts (unit: micron) | Host materials | Dopants | Molar ratio of host material to dopant | Reflective materials | Low-refractive index materials |
|---|---|---|---|---|---|---|
| 500×500 | 50 | CsI | NaI | 1000:3 | None | Silicon dioxide |
| 160×190 | 15 | NaI | TlI | 10000:1 | None | Titanium dioxide |
| 10×10 | 1 | CsBr | EuBr | 100:1 | Silver | None |
| 320×240 | 25 | LiI | EuI | 1000:6 | Alumi num | None |
| 143×143 | 10 | Bismuth germanate | None | - | None | None |

It can be observed from the above experimental results that the scintillation crystals growing on the surfaces of the pixel units and the isolation belts have different morphologies, and meanwhile the scintillation crystal film significantly enhances the reflection of visible light due to the introduction of a reflective material or a low-refractive index material.

## Claims

1. A pixelized scintillation crystal film, comprising:
a surface pixelized substrate (1) having a surface formed by pixel unit areas (2) separated from each other and isolation belt areas (3) located between the pixel unit areas (2), the isolation belt area (3) between every two adjacent pixel unit areas (2) independently comprising n isolation belts (4), wherein n is an integer greater than or equal to 1, and the number n of the isolation belts (4) in the isolation belt area (3) at a different position may be the same or different; and
scintillation crystals (5, 6) comprising a scintillation material located on the surface pixelized substrate (1);
**characterized in that:** the scintillation crystal (5) comprising the scintillation material on the pixel unit areas (2) has a first morphology, the scintillation crystal (6) comprising the scintillation material on the isolation belts (4) has a second morphology to a (n+1)^{th} morphology, and the first morphology is different from the second morphology to the (n+1)^{th} morphology which may be the same or different, wherein n is defined as above.

2. The pixelized scintillation crystal film according to claim 1, **characterized in that** any side of a geometry of the pixel units has a length of not less than 10 microns and not greater than 500 microns.

3. The pixelized scintillation crystal film according to claim 1, **characterized in that** the isolation belt areas (3) have a width of not less than 1 micron and not greater than 50 microns.

4. The pixelized scintillation crystal film according to claim 1, **characterized in that** the expression that the morphologies are different means that X-ray diffraction patterns of crystals are different.

5. The pixelized scintillation crystal film according to claim 1, **characterized in that** a surface material of the isolation belts (4) comprises a polymeric material having hydroxyl and/or carboxyl at side chains.

6. The pixelized scintillation crystal film according to claim 1, **characterized in that** the scintillation crystal material and the dopant material have a molar ratio of (100-10000):1.

7. The pixelized scintillation crystal film according to claim 1, **characterized in that** a reflective material and/or a low-refractive index material having a refractive index smaller than the scintillation crystals (5, 6) used, covers and fills on one side of the substrate where no scintillation crystal grows or on a scintillation crystal surface and in a scintillation crystal gap.

8. A method for preparing the pixelized scintillation crystal film according to any one of claims 1-7, the method **characterized by** comprising:
(1) providing a surface pixelized substrate (1) consisting of pixel unit areas (2) and isolation belt areas (3), wherein surfaces of the pixel unit areas (2) are suitable for the growth of a crystal having a first morphology, or surfaces of the pixel unit areas (2) have a first wettability with a scintillation material, and the isolation belt area (3) between the adjacent pixel unit areas (2) comprises an isolation belt (4), wherein a surface of the isolation belt (4) is suitable for the growth of a crystal having a morphology different from the first morphology, or a surface of the isolation belt (4) has a wettability with the scintillation material that is different from the first wettability; and
(2) growing a scintillation crystal having a first morphology on surfaces of the pixel unit areas (2), and growing a scintillation crystal having a second morphology on the surface of the isolation belt (4), and the first morphology is different from the second morphology, the crystals on surfaces of the pixel unit areas (2) and the isolation belts (4) being formed by the scintillation material and an optional dopant material.

9. The method for preparing the pixelized scintillation crystal film according to claim 8, **characterized in that** the pixel unit areas (2) and the isolation belt areas (3) have different surface properties such that a scintillation material grows on the two surfaces under the same conditions to obtain crystals having different X-ray diffraction patterns.

10. The method for preparing the pixelized scintillation crystal film according to claim 8, wherein the isolation belt area (3) between the adjacent pixel unit areas (2) comprises n isolation belts (4), wherein n is an integer greater than or equal to 1, and the number n of the isolation belts (4) in the isolation belt area (3) at a different position may be the same or different, said growing comprising growing a scintillation crystal having a second morphology to a (n+1)^{th} morphology different from the first morphology and the second morphology to the (n+1)^{th} morphology may be the same or different.

11. A method according to claim 8, the method **characterized by** comprising:
(1) covering the substrate surface with at least one layer of a surface material capable of improving or reducing the wettability between the substrate surface and the scintillation material;
(2) removing part of the surface material using a mask etching technology to expose a corresponding part of the substrate surface, thereby forming a surface pixelized substrate (1) consisting of the pixel unit areas (2) and the isolation belt areas (3); and
(3) growing scintillation crystals (5, 6) formed by the scintillation material and the optional dopant material on the surface pixelized substrate (1) to form the pixelized scintillation crystal film.

12. A method according to claim 8, the method **characterized by** comprising:
(1) processing the substrate surface into a desired pixelated graphic using a mask etching technology;
(2) covering the substrate surface formed in (1) with at least one layer of a surface material capable of improving or reducing the wettability between the substrate surface and the scintillation material;
(3) removing part of the surface material using an etching technology to expose the substrate surface, thereby forming a surface pixelized substrate (1) consisting of the pixel unit areas (2) and the isolation belt areas (3); and
(4) growing scintillation crystals (5, 6) formed by the scintillation material and the optional dopant material on the surface pixelized substrate (1) to form the pixelized scintillation crystal film.

13. A method according to claim 8, the method **characterized by** comprising:
(1) sequentially covering the substrate surface with a first surface material and a second surface material capable of improving or reducing the wettability between the first surface material and the scintillation material;
(2) removing part of the first surface material using a mask etching technology to expose a corresponding surface of the second surface material, thereby forming a surface pixelized substrate (1) consisting of the pixel unit areas (2) and the isolation belt areas (3); and
(3) growing scintillation crystals (5, 6) formed by the scintillation material and an optional dopant material on the surface pixelized substrate to form the pixelized scintillation crystal film.

14. A method according to claim 8, the method **characterized by** comprising:
(1) covering the substrate surface with a first surface material;
(2) removing part of the first surface material using a mask etching technology to form a pixelated graphic;
(3) covering a substrate formed in (2) with a second surface material capable of improving or reducing the wettability between a surface of the first surface material and the scintillation material;
(4) removing part of the second surface material using an etching technology to expose a corresponding surface of the first surface material, thereby forming a surface pixelized substrate consisting of the pixel unit areas (2) and the isolation belt areas (3); and
(5) growing scintillation crystals (5, 6) formed by the scintillation material and the optional dopant material on the surface pixelized substrate to form the pixelized scintillation crystal film.

15. Use of the pixelized scintillation crystal film according to any one of claims 1-7 in ultraviolet detection, X-ray detection and gamma ray detection.

## Patentansprüche

1. Ein pixelisierter Szintillationskristallfilm, umfassend:
ein oberflächenpixelisiertes Substrat (1) mit einer Oberfläche, die durch voneinander getrennte Pixeleinheitsbereiche (2) und zwischen den Pixeleinheitsbereichen (2) angeordnete Isolationsbandbereiche (3) gebildet wird, wobei der Isolationsbandbereich (3) zwischen allen zwei benachbarten Pixeleinheitsbereichen (2) unabhängig voneinander n Isolationsbänder (4) umfasst, wobei n eine ganze Zahl größer oder gleich 1 ist und die Anzahl n der Isolationsbänder (4) in dem Isolationsbandbereich (3) an einer anderen Position gleich oder verschieden sein kann; und
Szintillationskristalle (5, 6) mit einem auf dem oberflächenpixelisierten Substrat (1) angeordneten Szintillationsmaterial;
**dadurch gekennzeichnet, dass:** der Szintillationskristall (5) mit dem Szintillationsmaterial in den Pixeleinheitsbereichen (2) eine erste Morphologie aufweist, der Szintillationskristall (6) mit dem Szintillationsmaterial auf den Isolationsbändern (4) eine zweite Morphologie zu einer (n+1) Morphologie aufweist und sich die erste Morphologie von der zweiten Morphologie zu der (n+1) Morphologie unterscheidet, die gleich oder verschieden sein kann, wobei n wie oben definiert ist.

2. Pixelisierter Szintillationskristallfilm nach Anspruch 1, **dadurch gekennzeichnet, dass** jedwede Seite einer Geometrie der Pixeleinheiten eine Länge von nicht weniger als 10 Mikrometern und nicht mehr als 500 Mikrometern aufweist.

3. Pixelisierter Szintillationskristallfilm nach Anspruch 1, **dadurch gekennzeichnet, dass** die Isolationsbandbereiche (3) eine Breite von nicht weniger als 1 Mikrometer und nicht mehr als 50 Mikrometer aufweisen.

4. Pixelisierter Szintillationskristallfilm nach Anspruch 1, **dadurch gekennzeichnet, dass** der Ausdruck, dass die Morphologien verschieden sind, bedeutet, dass die Röntgenbeugungsmuster der Kristalle verschieden sind.

5. Pixelisierter Szintillationskristallfilm nach Anspruch 1, **dadurch gekennzeichnet, dass** ein Oberflächenmaterial der Isolationsbänder (4) ein polymeres Material mit Hydroxyl und/oder Carboxyl an Seitenketten umfasst.

6. Pixelisierter Szintillationskristallfilm nach Anspruch 1, **dadurch gekennzeichnet, dass** das Szintillationskristallmaterial und das Dotierungsmaterial ein Molverhältnis von (100-10000):1 aufweisen.

7. Pixelisierter Szintillationskristallfilm nach Anspruch 1, **dadurch gekennzeichnet, dass** ein reflektierendes Material und/oder ein Material mit niedrigem Brechungsindex mit einem Brechungsindex kleiner als die verwendeten Szintillationskristalle (5, 6),
auf einer Seite des Substrats, auf der kein Szintillationskristall gezüchtet wird, oder auf einer Szintillationskristalloberfläche und in einem Szintillationskristallspalt bedeckt und füllt.

8. Verfahren zur Herstellung des pixelisierten Szintillationskristallfilms nach einem der Ansprüche 1 bis 7, **dadurch gekennzeichnet, dass es** Folgendes umfasst:
(1) Bereitstellen eines oberflächenpixelisierten Substrats (1) bestehend aus Pixeleinheitsbereichen (2) und Isolationsbandbereichen (3), wobei Oberflächen der Pixeleinheitsbereiche (2) für die Zucht eines Kristalls mit einer ersten Morphologie geeignet sind, oder Oberflächen der Pixeleinheitsbereiche (2) eine erste Benetzbarkeit mit einem Szintillationsmaterial aufweisen, und der Isolationsbandbereich (3) zwischen den benachbarten Pixeleinheitsbereichen (2) ein Isolationsband (4) umfasst, wobei eine Oberfläche des Isolationsbandes (4) zum Zucht eines Kristalls mit einer von der ersten Morphologie verschiedenen Morphologie geeignet ist, oder eine Oberfläche des Isolationsbands (4) eine Benetzbarkeit mit dem Szintillationsmaterial aufweist, die sich von der ersten Benetzbarkeit unterscheidet; und
(2) Züchten eines Szintillationskristalls mit einer ersten Morphologie auf Oberflächen der Pixeleinheitsbereiche (2) und Züchten eines Szintillationskristalls mit einer zweiten Morphologie auf der Oberfläche des Isolationsbands (4), wobei sich die erste Morphologie von der zweiten Morphologie unterscheidet, wobei die Kristalle auf Oberflächen der Pixeleinheitsbereiche (2) und der Isolationsbänder (4) durch das Szintillationsmaterial
und ein optionales Dotierungsmaterial gebildet werden.

9. Verfahren zur Herstellung des pixelisierten Szintillationskristallfilms nach Anspruch 8, **dadurch gekennzeichnet, dass** die Pixeleinheitsbereiche (2) und die Isolationsbandbereiche (3) verschiedene Oberflächeneigenschaften aufweisen, so dass ein Szintillationsmaterial auf den beiden Oberflächen unter den gleichen Bedingungen gezüchtet wird, um Kristalle mit verschiedenen Röntgenbeugungsmustern zu erhalten.

10. Verfahren zur Herstellung des pixelisierten Szintillationskristallfilms nach Anspruch 8, wobei der Isolationsbandbereich (3) zwischen den benachbarten Pixeleinheitsbereichen (2) n Isolationsbänder (4) umfasst, wobei n eine ganze Zahl größer oder gleich 1 ist und die Anzahl n der Isolationsbänder (4) in dem Isolationsbandbereich (3) an einer anderen Position gleich oder verschieden sein kann, wobei das Züchten das Züchten eines Szintillationskristalls mit einer zweiten Morphologie zu einer (n+1) Morphologie umfasst, die verschieden von der ersten Morphologie ist und die zweite Morphologie zu der (n+1) Morphologie gleich oder verschieden sein kann.

11. Verfahren nach Anspruch 8, wobei das Verfahren **dadurch gekennzeichnet** wird, dass es Folgendes umfasst:
(1) Bedecken der Substratoberfläche mit wenigstens einer Schicht eines Oberflächenmaterials, das die Benetzbarkeit zwischen der Substratoberfläche und dem Szintillationsmaterial verbessern oder verringern kann;
(2) Entfernen eines Teils des Oberflächenmaterials unter Verwendung einer Maskenätztechnologie, um einen entsprechenden Teil der Substratoberfläche freizulegen, wodurch ein oberflächenpixelisiertes Substrat (1) gebildet wird, das aus den Pixeleinheitsbereichen (2) und den Isolationsbandbereichen (3) besteht; und
(3) Züchten von Szintillationskristallen (5, 6), die durch das Szintillationsmaterial und das optionale Dotierungsmaterial gebildet werden, auf dem oberflächenpixelisierten Substrat (1), um den pixelisierten Szintillationskristallfilm zu bilden.

12. Verfahren nach Anspruch 8, wobei das Verfahren **dadurch gekennzeichnet** wird, dass es Folgendes umfasst:
(1) Bearbeitung der Substratoberfläche zu einer gewünschten pixelierten Grafik unter Verwendung einer Maskenätztechnologie;
(2) Bedecken der in (1) gebildeten Substratoberfläche mit wenigstens einer Schicht eines Oberflächenmaterials, das die Benetzbarkeit zwischen der Substratoberfläche und dem Szintillationsmaterial verbessern oder verringern kann;
(3) Entfernen eines Teils des Oberflächenmaterials unter Verwendung einer Ätztechnologie, um die Substratoberfläche freizulegen, wodurch ein oberflächenpixelisiertes Substrat (1) gebildet wird, das aus den Pixeleinheitsbereichen (2) und den Isolationsbandbereichen (3) besteht; und
(4) Züchten von Szintillationskristallen (5, 6), die durch das Szintillationsmaterial und das optionale Dotierungsmaterial gebildet werden, auf dem oberflächenpixelisierten Substrat (1), um den pixelisierten Szintillationskristallfilm zu bilden.

13. Verfahren nach Anspruch 8, wobei das Verfahren **Dadurch gekennzeichnet** wird, dass es Folgendes umfasst:
(1) aufeinanderfolgendes Bedecken der Substratoberfläche mit einem ersten Oberflächenmaterial und einem zweiten Oberflächenmaterial, das die Benetzbarkeit zwischen dem ersten Oberflächenmaterial und dem Szintillationsmaterial verbessern oder verringern kann;
(2) Entfernen eines Teils des ersten Oberflächenmaterials unter Verwendung einer Maskenätztechnologie, um eine entsprechende Oberfläche des zweiten Oberflächenmaterials freizulegen, wodurch ein oberflächenpixelisiertes Substrat (1) gebildet wird, das aus den Pixeleinheitsbereichen (2) und den Isolationsbandbereichen (3) besteht; und
(3) Züchten von Szintillationskristallen (5, 6), die durch das Szintillationsmaterial und ein optionales Dotierungsmaterial gebildet werden, auf dem oberflächenpixelisierten Substrat, um den pixelisierten Szintillationskristallfilm zu bilden.

14. Verfahren nach Anspruch 8, wobei das Verfahren **dadurch gekennzeichnet** wird, dass es Folgendes umfasst:
(1) Bedecken der Substratoberfläche mit einem ersten Oberflächenmaterial;
(2) Entfernen eines Teils des ersten Oberflächenmaterials unter Verwendung einer Maskenätztechnologie, um eine pixelierte Grafik zu bilden;
(3) Bedecken eines in (2) gebildeten Substrats mit einem zweiten Oberflächenmaterial, das die Benetzbarkeit zwischen einer Oberfläche des ersten Oberflächenmaterials und dem Szintillationsmaterial verbessern oder verringern kann;
(4) Entfernen eines Teils des zweiten Oberflächenmaterials unter Verwendung einer Ätztechnologie, um eine entsprechende Oberfläche des ersten Oberflächenmaterials freizulegen, wodurch ein oberflächenpixelisiertes Substrat gebildet wird, das aus den Pixeleinheitsbereichen (2) und den Isolationsbandbereichen (3) besteht; und
(5) Züchten von Szintillationskristallen (5, 6), die durch das Szintillationsmaterial und das optionale Dotierungsmaterial gebildet werden, auf dem oberflächenpixelisierten Substrat, um den pixelisierten Szintillationskristallfilm zu bilden.

15. Verwendung des pixelisierten Szintillationskristallfilms nach einem der Ansprüche 1 bis 7 bei der Ultraviolettdetektion, der Röntgendetektion und der Gammastrahlendetektion.

## Revendications

1. Film de cristaux de scintillation pixélisés, comprenant :
un substrat à surface pixélisée (1) présentant une surface formée par des zones d'unité de pixel (2) séparées les unes des autres et des zones de ceinture d'isolation (3) situées entre les zones d'unité de pixel (2), la zone de ceinture d'isolation (3) entre deux zones d'unité de pixel adjacentes (2) comprenant de façon indépendante n ceintures d'isolation (4), dans lequel n est un nombre entier supérieur ou égal à 1, et le nombre n des ceintures d'isolation (4) dans la zone de ceinture d'isolation (3) à un emplacement différent peut être identique ou différent ; et
des cristaux de scintillation (5, 6) comprenant un matériau de scintillation situés sur le substrat à surface pixélisée (1) ;
**caractérisé en ce que** : le cristal de scintillation (5) comprenant le matériau de scintillation sur les zones d'unité de pixel (2) présente une première morphologie, le cristal de scintillation (6) comprenant le matériau de scintillation sur les ceintures d'isolation (4) présente une seconde morphologie à une (n+1)^{ième} morphologie, et la première morphologie est différente de la seconde morphologie à la (n+1)^{ième} morphologie qui peuvent être identiques ou différentes, dans lequel n est tel que défini ci-dessus.

2. Film de cristaux de scintillation pixélisés selon la revendication 1, **caractérisé en ce qu'**un côté quelconque d'une géométrie des unités de pixel a une longueur supérieure ou égale à 10 microns et inférieure ou égale à 500 microns.

3. Film de cristaux de scintillation pixélisés selon la revendication 1, **caractérisé en ce que** les zones de ceinture d'isolation (3) ont une largeur supérieure ou égale à 1 micron et inférieure ou égale à 50 microns.

4. Film de cristaux de scintillation pixélisés selon la revendication 1, **caractérisé en ce que** l'expression selon laquelle les morphologies sont différentes signifie que les diagrammes de diffraction des rayons X des cristaux sont différents.

5. Film de cristaux de scintillation pixélisés selon la revendication 1, **caractérisé en ce qu'**un matériau de surface des ceintures d'isolation (4) comprend un matériau polymère ayant un groupe hydroxyle et/ou un groupe carboxyle dans des chaînes latérales.

6. Film de cristaux de scintillation pixélisés selon la revendication 1, **caractérisé en ce que** le matériau de cristal de scintillation et le matériau dopant ont un rapport molaire de (100 à 10 000):1.

7. Film de cristaux de scintillation pixélisés selon la revendication 1, **caractérisé en ce qu'**un matériau réfléchissant et/ou un matériau à faible indice de réfraction ayant un indice de réfraction inférieur à celui des cristaux de scintillation (5, 6) utilisés, recouvre et remplit un côté du substrat où aucun cristal de scintillation ne croît ou une surface de cristal de scintillation et un espace de cristal de scintillation.

8. Procédé de préparation du film de cristaux de scintillation pixélisés selon l'une quelconque des revendications 1 à 7, le procédé étant **caractérisé en ce qu'**il comprend :
1) la fourniture d'un substrat à surface pixélisée (1) constitué de zones d'unité de pixel (2) et de zones de ceinture d'isolation (3), dans lequel des surfaces des zones d'unité de pixel (2) sont adaptées à la croissance d'un cristal présentant une première morphologie, ou des surfaces des zones d'unité de pixel (2) ont une première mouillabilité avec un matériau de scintillation, et la zone de ceinture d'isolation (3) entre les zones d'unité de pixel adjacentes (2) comprend une ceinture d'isolation (4), dans lequel une surface de la ceinture d'isolation (4) est adaptée à la croissance d'un cristal présentant une morphologie différente de la première morphologie, ou une surface de la ceinture d'isolation (4) a une mouillabilité avec le matériau de scintillation qui est différente de la première mouillabilité ; et
2) la croissance d'un cristal de scintillation présentant une première morphologie sur des surfaces des surfaces des zones d'unité de pixel (2), et la croissance d'un cristal de scintillation présentant une seconde morphologie sur la surface de la ceinture d'isolation (4), et la première morphologie est différente de la seconde morphologie, les cristaux sur des surfaces des zones d'unité de pixel (2) et des ceintures d'isolation (4) étant formés par le matériau de scintillation et un matériau dopant optionnel.

9. Procédé de préparation du film de cristaux de scintillation pixélisés selon la revendication 8, **caractérisé en ce que** les zones d'unité de pixel (2) et les zones de ceinture d'isolation (3) présentent des propriétés de surface différentes de sorte qu'un matériau de scintillation croît sur les deux surfaces dans les mêmes conditions pour obtenir des cristaux présentant des diagrammes de diffraction des rayons X différents.

10. Procédé de préparation du film de cristaux de scintillation pixélisés selon la revendication 8, dans lequel la zone de ceinture d'isolation (3) entre les zones d'unité de pixel adjacentes (2) comprend n ceintures d'isolation (4), dans lequel n est un nombre entier supérieur ou égal à 1, et le nombre n des ceintures d'isolation (4) dans la zone de ceinture d'isolation (3) à un emplacement différent peut être identique ou différent, ladite croissance comprenant la croissance d'un cristal de scintillation présentant une seconde morphologie à une (n+1)^{ième} morphologie différentes de la première morphologie et la seconde morphologie à la (n+1)^{ième} morphologie peuvent être identiques ou différentes.

11. Procédé selon la revendication 8, le procédé étant **caractérisé en ce qu'**il comprend :
1) le revêtement de la surface du substrat avec au moins une couche d'un matériau de surface capable d'améliorer ou de réduire la mouillabilité entre la surface du substrat et le matériau de scintillation ;
2) le retrait d'une partie du matériau de surface à l'aide d'une technique de gravure de masque pour exposer une partie correspondante de la surface du substrat, formant ainsi un substrat à surface pixélisée (1) constitué des zones d'unité de pixel (2) et des zones de ceinture d'isolation (3) ; et
3) la croissance de cristaux de scintillation (5, 6) formés par le matériau de scintillation et le matériau dopant optionnel sur le substrat à surface pixélisée (1) pour former le film de cristaux de scintillation pixélisés.

12. Procédé selon la revendication 8, le procédé étant **caractérisé en ce qu'**il comprend :
1) le traitement de la surface du substrat pour obtenir un graphique pixélisé souhaité à l'aide d'une technique de gravure de masque ;
2) le revêtement de la surface du substrat formée à l'étape 1) avec au moins une couche d'un matériau de surface capable d'améliorer ou de réduire la mouillabilité entre la surface du substrat et le matériau de scintillation ;
3) le retrait d'une partie du matériau de surface à l'aide d'une technique de gravure pour exposer la surface du substrat, formant ainsi un substrat à surface pixélisée (1) constitué des zones d'unité de pixel (2) et des zones de ceinture d'isolation (3) ; et
4) la croissance de cristaux de scintillation (5, 6) formés par le matériau de scintillation et le matériau dopant optionnel sur le substrat à surface pixélisée (1) pour former le film de cristaux de scintillation pixélisés.

13. Procédé selon la revendication 8, le procédé étant **caractérisé en ce qu'**il comprend :
1) le revêtement séquentiel de la surface du substrat avec un premier matériau de surface et un second matériau de surface capables d'améliorer ou de réduire la mouillabilité entre le premier matériau de surface et le matériau de scintillation ;
2) le retrait d'une partie du premier matériau de surface à l'aide d'une technique de gravure de masque pour exposer une surface correspondante du second matériau de surface, formant ainsi un substrat à surface pixélisée (1) constitué des zones d'unité de pixel (2) et des zones de ceinture d'isolation (3) ; et
3) la croissance de cristaux de scintillation (5, 6) formés par le matériau de scintillation et un matériau dopant optionnel sur le substrat à surface pixélisée pour former le film de cristaux de scintillation pixélisés.

14. Procédé selon la revendication 8, le procédé étant **caractérisé en ce qu'**il comprend :
1) le revêtement de la surface du substrat avec un premier matériau de surface ;
2) le retrait d'une partie du premier matériau de surface à l'aide d'une technique de gravure de masque pour former un graphique pixélisé ;
3) le revêtement d'un substrat formé à l'étape 2) avec un second matériau de surface capable d'améliorer ou de réduire la mouillabilité entre une surface du premier matériau de surface et le matériau de scintillation ;
4) le retrait d'une partie du second matériau de surface à l'aide d'une technique de gravure pour exposer une surface correspondante du premier matériau de surface, formant ainsi un substrat à surface pixélisée constitué des zones d'unité de pixel (2) et des zones de ceinture d'isolation (3) ; et
5) la croissance de cristaux de scintillation (5, 6) formés par le matériau de scintillation et le matériau dopant optionnel sur le substrat à surface pixélisée pour former le film de cristaux de scintillation pixélisés.

15. Utilisation du film de cristaux de scintillation pixélisés selon l'une quelconque des revendications 1 à 7 dans la détection d'ultraviolets, la détection de rayons X et la détection de rayons gamma.
